Europäisches Patentamt

European Patent Office

Office européen des brevets

(19)

(11) Publication number:   **0 107 396**
**B1**

(12) EUROPEAN PATENT SPECIFICATION

(45) Date of publication of patent specification: **03.08.88**

(21) Application number: **83305881.1**

(22) Date of filing: **29.09.83**

(51) Int. Cl.⁴: **H 01 M 8/04, H 01 M 8/24, H 01 M 2/38**

(54) System for supplying electrolyte to fuel cells.

(30) Priority: **30.09.82 US 430145**
**30.09.82 US 430155**
**30.09.82 US 430144**

(43) Date of publication of application:
**02.05.84 Bulletin 84/18**

(45) Publication of the grant of the patent:
**03.08.88 Bulletin 88/31**

(84) Designated Contracting States:
**AT BE CH DE FR GB IT LI LU NL SE**

(56) References cited:
**EP-A-0 021 376**
**FR-A- 695 184**
**FR-A-1 447 949**
**FR-A-2 258 009**
**US-A-1 474 169**
**US-A-3 708 341**

**PATENTS ABSTRACT OF JAPAN, vol. 6, no.
128(E-118)(1006), 14th July 1982**

(73) Proprietor: **ENGELHARD CORPORATION**
**70 Wood Avenue South CN 770**
**Iselin New Jersey 08830 (US)**

(72) Inventor: **Adlhart, Otto J.**
**103 Magnolia Avenue**
**Tenafly New Jersey 07670 (US)**
Inventor: **Cohn, J. Gunther**
**20 Lincoln Avenue**
**West Orange New Jersey 07502 (US)**
Inventor: **Feigenbaum, Haim**
**149 North 7th Avenue**
**Highland Park New Jersey 08904 (US)**
Inventor: **Kaufman, Arthur**
**69 Burnett Terrace**
**West Orange New Jersey 07052 (US)**

(74) Representative: **Colgan, Stephen James et al**
**CARPMAELS & RANSFORD 43 Bloomsbury
Square**
**London WC1A 2RA. (GB)**

Courier Press, Leamington Spa, England.

## Description

### Background of the invention

This invention relates to a fuel cell having electrodes with an electrolyte supporting structure interposed therebetween for the drawing of electrolyte into interaction regions at the electrodes for electrochemical reactions with fluidic reactants and, more particularly, to an electrolyte supply system coupled to said electrolyte support structure for storing electrolyte and conducting the stored electrolyte to the cell with constant hydrostatic pressure. Much research is being done in the area of fuel cell technology in order to provide ever increasing amounts of electric power and for operating such cells over longer periods of time without any need for shutdown to accomplish maintenance. As compared to other methods of generation of electric power from combustible fuel, a fuel cell has higher efficiency and is also characterized by a simplicity of physical structure in that such cells can be constructed without any moving parts and are of modular design allowing easy scale up.

While a variety of electrochemical reactions are known for the conversion of fuel into electricity without the direct burning of such fuels, one well-known form of cell utilizes the reactions between oxygen and hydrogen, the hydrogen serving as the fuel. One common form of construction for the hydrogen-oxygen cell is the laminated structure wherein the electrodes are spaced apart by a porous layer of material which holds an electrolyte. For example, the electrolyte may be a concentrated phosphoric acid.

The hydrogen is guided by passageways behind the active region of the anode and the oxygen is guided by passageways behind the active region of the cathode. At the anode, the hydrogen gas dissociates into hydrogen ions plus electrons in the presence of a catalyst, typically a precious metal such as platinum or platinum with other metals. The hydrogen ions migrate through the electrolyte to the cathode in a process constituting ionic current transport while the electron travels through an external circuit to the cathode. In the presence of a catalyst at the cathode, the hydrogen ions, the electrons, and molecules of oxygen combine to produce water.

In order to provide for the physical placement of the respective reactants at the catalyst layers of the anode and cathode, layers of materials having hydrophilic and hydrophobic properties are disposed in an arrangement contiguous to the catalyst layers. They permit the electrolyte and the oxygen at the cathode and the hydrogen at the anode to contact the catalyst layer. The hydrophobic material is provided with pores of sufficiently large size to permit the gaseous hydrogen and the gaseous oxygen to freely flow through the material so as to come into contact with the catalyst.

Details in the construction of fuel cells, and in the component parts thereof, are disclosed in the United States Patents 3,453,149 of Adlhart and 4,064,322 of Bushnell. These two patents show structures for guiding the gaseous reactants into the regions of the catalyst. In addition, the Bushnell patent shows space within a cell for the storage of electrolyte so as to compensate for any changes in the quantity of electrolyte available for ion transport. An assembly for combining together a plurality of fuel cells in a single power source is disclosed in U.S. Patent 4,175,165 of Adlhart. This patent also shows a manifold for the simultaneous feeding of the reactant gases to the cathode and the anode of the respective cells.

A problem arises during the operation of a fuel cell in that the cell has electrolyte losses. For instance, as a result of electrolyte volume changes, such as those due to temperature and composition changes, electrolyte can be driven out of the matrix and be permanently lost from use within the matrix. A fuel cell has limited capacity for the storage of additional electrolyte therein. Thus, depending on the amount of such storage capacity, there is limitation on the length of time during which the fuel cell can be operated before shutdown for maintenance. Such maintenance includes the replenishment of the amount of electrolyte in the requisite concentration.

A further problem arises in the complexity of the structure required to lead the electrolyte in from a region of storage to the region of electrochemical activity alongside the layers of the catalyst. Such electrolyte lead-in structures are described in the foregoing Bushnell patent. In particular, it is noted that such structures tend to increase the size of the cell, to increase resistance losses associated with the flow of electric current, and to decrease the surface area available for the electrochemical reactions.

Yet another problem is the supplying of electrolyte to such a fuel cell in a manner in which it can be absorbed by the cell, and at such rate as may be necessitated by the loss of eelctrolyte during the operation of the cell.

### Summary of the invention

The foregoing problems are overcome and other advantages are provided by a fuel cell and a system for supplying electrolyte thereto, both the cell and the supply system being fabricated in accordance with the invention. The cell is constructed with an electrolyte supporting structure having a means to draw and distribute electrolyte therein, and the supply system is constructed so as to make electrolyte available to the cell at such rates as may be required. The fuel cell comprises a laminated structure wherein the electrodes are spaced apart by a layer of porous material. In a preferred embodiment of the invention, the porous material is provided as a matrix assembly having a central layer of relatively large pores.

In accordance with one embodiment of the invention, the supply system is provided at a gravity feed wherein cups are provided at different elevations corresponding to the elevations of respective ones of the cells in a stack of such cells in a fuel cell power supply. A pump develops hydrostatic pressure for driving the electrolyte up into the respective cups. A set of conduits, in the form of capillary tubes, carries electrolyte from respective ones of the cups to electrolyte supporting members in respective ones of the fuel cells. The rate of flow of electrolyte into the cell is controlled by the electrolyte demand of the electrolyte supporting structure in each cell and by the hydrostatic pressure developed by the difference in height between a cup and its corresponding cell.

In accordance with another embodiment of the invention, the supply system is provided with a capillary feed, preferably wherein cups or troughs are provided at different elevations corresponding to the elevations of respective ones of the cells in a stack of such cells in fuel cell power supply. A pumping means is provided for pumping electrolyte up into the respective troughs. A system of tubes is provided wherein each tube includes a wicking element for drawing the fluid of the electrolyte by capillary action from the storage trough to the electrolyte matrix assembly of the respective cells. The rate of flow of electrolyte into the cell is controlled by the wicking action of the electrolyte supporting structure in each cell. Alternatively, the cups or troughs need not be elevated but merely rely upon the capillary action of the wicking element.

In accordance with another embodiment of the invention, the supply system is provided with a gravity feed wherein cups or trays are provided at different elevations corresponding to the elevations of respective ones of the cells in a stack of such cells in a fuel cell power supply. A pump is provided for pumping electrolyte above the trays allowing the electrolyte cascade from tray to tray whereby the trays are filled to their rims. A set of conduits carries electrolyte from respective ones of the trays to electrolyte supporting members in respective ones of the fuel cells. The rate of flow of electrolyte into the cell is controlled by the electrolyte demand of the electrolyte supporting structure in each cell and the hydrostatic pressure developed by the difference in height between a tray and its corresponding cell.

Brief description of the drawings

The foregoing aspects and other features of the invention are explained in the following description taken in connection with the accompanying drawing wherein:

Figure 1 is a perspective view of a portion of a stack of fuel cells in an assembly of such fuel cells, the portion comprising one complete fuel cell with a second cell being partially shown in phantom and the fuel cell being sectioned to identify the individual layers thereof.

Figure 2 is a diagrammatic view of a system for supplying electrolyte to a stack, each cell being of the form shown in Figure 1.

Figure 3 is a diagrammatic view of a fuel cell, such as the cell of Figure 1, showing the interconnection of a capillary tube to an electrolyte supporting member of the cell.

Figure 4 is a diagrammatic view shown in section of a feed system in accordance with the invention wherein the electrolyte is conveyed by wicking fibers to a fuel cell, such as the cell of Figure 1;

Figure 5 is a diagrammatic view of the wicking fibers of Figure 4 extending from tightly fitting tube;

Figure 6 is a diagrammatic view of a fuel cell, such as the cell of Figure 1, showing the interconnection of an electrolyte wicking fiber to an electrolyte supporting member of the cell;

Figure 7 is a diagrammatic sectional view of an embodiment of the supply system constructed of sponge material in trays having drains for excess electrolyte;

Figure 8 is a perspective view of an embodiment of a system for supplying electrolyte to fuel cells in the stack;

Figure 9 is a top view of a portion of the manifold shown in Figure 8;

Figure 10 is a sectional view of a portion of the manifold taken along line 4—4 of Figure 9;

Figure 11 is a sectional view of a portion of the manifold taken along line 5—5 of Figure 10;

Figure 12 is a sectional view of an alternative embodiment of the electrolyte feeding means; and

Figure 13 is an isometric view of the embodiment in Figure 12.

Detailed description of the invention

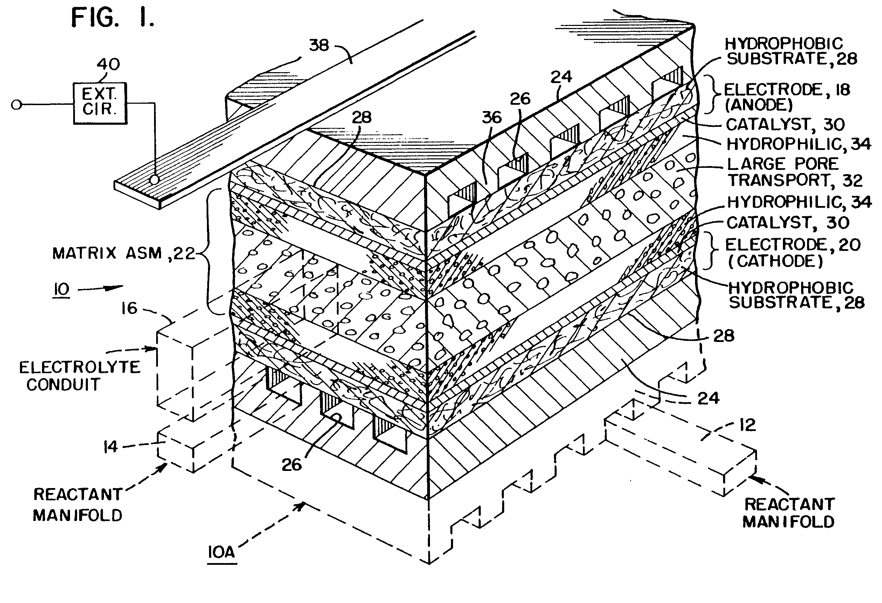

In Figure 1, a fuel cell 10 is shown in perspective view. A part of a second fuel cell 10A, having the same construction as the cell 10, is shown in phantom and is placed contiguous to the cell 10 as would be the case if the cell 10 is understood to be one of many such cells which would ordinarily be placed in a stack (not shown). Connections of the cells 10 and 10A via manifolds for the conveyance of electrolyte are shown schematically. Two such representative manifolds are shown, namely, a manifold 12 for the conveyance of hydrogen to the anode of respective cells of the stack and a manifold 14 for the conveyance of oxygen to the cathode of respective cells of the stack. A set of electrolyte conduits 16 (only one of which is shown) conveys electrolyte to the respective cells of the stack. Although manifolds 12 and 14 are shown in a representative fashion in Figure 1, it is understood that a single manifold for each reactant running generally along the sides of the stack can feed reactants to the cells through respective passages 26.

The fuel cell 10 comprises two electrodes, namely, an anode 18 and a cathode 20 which are separated by a means to draw and distribute electrolyte such as an electrolyte matrix assembly 22. Each electrode abuts a reactant distribution plate 24. The top of the cell in Figure 1, having grooves to bring in and distribute only one reactant since it is at the end of the stack has a plate 24. The plates 24 on the other side of the cell depicted are part of a bi-polar assembly made up of two gas distribution plates 24 in back-to-back position to supply reactants to the cell shown and the adjacent cell not shown.

Plates 24, the termination plate and the bipolar assembly, have passages 26 for the entry of fluidic or gaseous reactants and elimination of any residual gases. Each electrode comprises a hydrophobic substrate layer 28 and a catalyst 30. The plates 24 of the cell 10A provide a series interconnection of the two cells. The means to draw and distribute electrolyte in the cell can be of any suitable type. For instance, it can be a material having pores therein of a particular size to draw and distribute the electrolyte. Alternatively, it can be a material made from two or more layers of different size pores, such as that shown in Figure 1.

The matrix assembly 22 comprises a central permeable layer 32 having a relatively large pores which in the illustrated embodiment is made of fibrous carbon sheet material, the central layer 32 being positioned between two outside permeable layers 34 with pores which are smaller than the pores of the central layer 34. An electrolyte, typically phosphoric acid, is contained in the central layer 32. The pores of the central layer 32 are sufficiently large to permit the electrolyte to freely migrate through the central layer 32 so as to replenish the electrolyte within the cell 10 as may be required. The central layer 32 need not necessarily be completely filled with the electrolyte, it being necessary only to provide sufficient electrolyte to insure ionic conductivity between the electrodes 18 and 20.

The smaller pores of the outside layers 34 exert a strong capillary force which draws in the electrolyte from the central layer 32 to completely fill the outside layers 34. Layers 34 have a fast rate of uptake to the electrolyte contained in the large pore layer 32 as needed. By providing adequate electrolyte to layers 34 each outside layer 34 serves as a barrier against the flow of reactant gas into the matrix assembly area. Thus, electrolyte is found in each of the three layers of the matrix assembly 22 to provide ionic conductivity to the matrix assembly 22, the matrix assembly 22 with the electrolyte therein serving as a path by which positive hydrogen ions can migrate via ionic current transport from the anode 18 to the cathode 20.

The outer layers 34 of the matrix assembly 22 have silicon carbide powder bonded with PTFE particles to sustain hydrophilic properties to further insure that the layers 34 serve as gas barriers. In contrast, the hydrophobic layers 28 are impregnated with PTFE on the base material of the fibrous carbon to produce the hydrophobic characteristics. The porosity of the hydrophobic layer 28 is characterized by large pores through which the gaseous reactants can freely circulate so as to propagate from the passages 26 to the catalyst 30. Thus, the catalyst 30 is surrounded by hydrophobic and hydrophilic layers, the hydrophobic layer facing the gaseous reactants and the hydrophilic layer facing the electrolyte.

The hydrophobic layer 28 in each electrode is impregnated with Teflon to prevent the electrolyte from flooding into the electrode. This is an advantageous feature in the construction of the cell 10 since such flooding, if permitted, would reduce the number of open pores through which the gaseous reactants must pass in the electrodes.

A reduced number of available pores would result in a diminution in the capacity of the cell to produce electricity.

The hydrophobic layer 28 brings the gaseous reactant into contact with the catalyst 30 while the hydrophilic layer 34 brings the electrolyte into contact with the catalyst 30. Thereby, respective electrochemical reactions can take place at the catalyst 30 of the anode 18 and at the catalyst 30 of the electrode 20. The catalyst 30 is conveniently formed of a precious metal such as platinum with or without other metals which, under bonding and partial wet-proofing, is deposited on the hydrophobic layer 34. The same construction is utilized in each of the electrodes 18 and 20. It is noted that both the hydrophobic layer 28, the plate 24 and the electrodes 18 and 20 are electronically conducting. Thus, in the case of the anode 18, electrons released by the electrochemical reaction can propagate from the catalyst 30 through the fibrous carbon of the hydrophobic layer 28 and into the partitions or ribs 36 of the plate 24 which separate the respective passages 26.

In the series arrangement depicted in Figure 1, electrons from the anode of one cell are conducted directly to the cathode of the adjoining cell so as to migrate through the entire stack. Any exemplary stack termination contact 38 is shown attached by conventional methods to the plate 24 of the anode 18. The contact 38 is coupled to an external circuit 40 (indicated in block diagrammatic form) while the other terminal of the external circuit 40 is coupled to a similar contact (not shown) at the opposite end of the stack of the fuel cells. The electrons can, thereby, make a complete circuit from the negative terminal of the stack (the last of the anodes) via the external circuit 40 to the positive terminal of the stack (the first of the cathodes). Correspondingly, the hydrogen ions can migrate in each cell through the electrolyte continued in the matrix assembly proceeding from the anode of the cell through the cell to the cathode of the cell.

In operation, hydrogen is admitted through the manifold 12 to the passages 26 in the anodes 18 of each of the cells in the stack. Oxygen is admitted through the manifold 14 into the passages 26 of the cathodes 20 in each of the cells of the stack. Electrolyte is supplied via the set of conduits 16 to make contact with the central layers 34 of the membranes 22 in the respective fuel cells of the stack. By capillary action, the electrolyte is brought into contact with the catalyst 30 in each of the electrodes 18 and 20.

The hydrogen propagates from the passages 26 through the pores of the hydrophobic layer 28 to the catalyst 30 in the anode 18. The oxygen propagates from the passages 26 through the hydrophobic layer 28 to the catalyst 30 in the cathode 20. Thereby, the hydrogen and the electrolyte are placed in contact with each other at the interface of the catalyst 30 at the anode 18 and the oxygen and the electrolyte are placed in contact with each other at the interface of the catalyst 30 of the cathode 20. It is in these locations of the cell that the respective electrochemical reactions to produce electricity occur.

In accordance with a feature of the invention, the matrix assembly 22 is continuously in contact with electrolyte brought in by the set of conduits 16 from an external reservoir (not shown in Figure 1) of such electrolyte. This insures that the cell 10 is always filled with the requisite amount of electrolyte even in the presence of losses of electrolyte which may occur during operation of the cell 10. Losses of electrolyte in the region between the electrodes may occur during the operation of the cell 10 and, if not compensated for, can cause a reduction in the cell's output of electricity. Thereby, frequent shutdowns of the cell stack are not required to maintain the proper level of electrolyte in the outer layers 34 of the cells.

The central layer 32 is advantageously fabricated of a filamentary carbon paper such as that manufactured by the Kureha Chemical Industry Company of Tokyo, Japan. The paper is composed of chopped carbon fiber produced from pitch and residual charred carbon of phenolic resin. The fine diameter filaments can average approximately 3 mm (millimeters) in length and, when bonded together, can form a uniformly thin web. The paper can be approximately 0.003 to 0.020 inches thick, preferably being approximately 0.009 to 0.011 inches thick, and is readily reduced in thickness under compression. The term "large pore" means pores approximately 50—300 microns in size while the term "small pore" means pore approximately 1—10 microns in size. During assembly of the cell 10, the layers thereof are compressed in sandwich-like form under a pressure of approximately 30 to 50 lbs. per square inch.

The outer layers 34 are preferably Teflon-bonded silicon carbide. The silicon carbide is mixed with a suspension of Teflon and an inking vehicle such as polyethylene oxide. The mixture is applied to the catalyst side of the electrode and then smoothed such as by a blade. The mixture is dried and sintered. The electrolyte is then added to the layers during assembly of the cell.

The above described process produces a material having a small pore size in the ranges desired. Any suitable material can be used for layers 34. For instance, the material can be made from inert, solid, inorganic, porous particles bonded with an inert coagulated fluorocarbon polymer in the form of a network structure, and a free concentrated acid electrolyte entrapped in said network, wherein the inorganic particles are a compound which is a member of the group consisting of an oxide, sulfate and phosphate of at least one of the metals zirconium, tantalum, tungsten, chromium, and niobium as described in U.S. Patent 3,453,149. This patent is incorporated herein in its entirety by reference.

Further details on the construction of the respective layers of the cell 10 are well known, and are described, by way of example, in the foregoing U.S. Patent 3,453,149, 4,064,322 and 4,175,165. These patents describe the construction of cells utilizing porous material with PTFE and coatings of precious metal catalysts. The multiple porosity characteristic of the matrix assembly 22 provides for both the hydrophilic properties of the outer layers 34 while utilizing the larger pores of the central layer 32 for holding, moving and distributing the electrolyte so as to maintain the electrolyte saturation of the outer layers 34 during operation of the cell 10. In addition, the presence of the electrolyte in all three layers of the matrix assembly 22 provides the requisite conduction path for the hydrogen ions. Thus, the matrix assembly 22 of the invention permits the cell 10 to operate normally while maintaining the uniform distribution and the proper level of electrolyte therein.

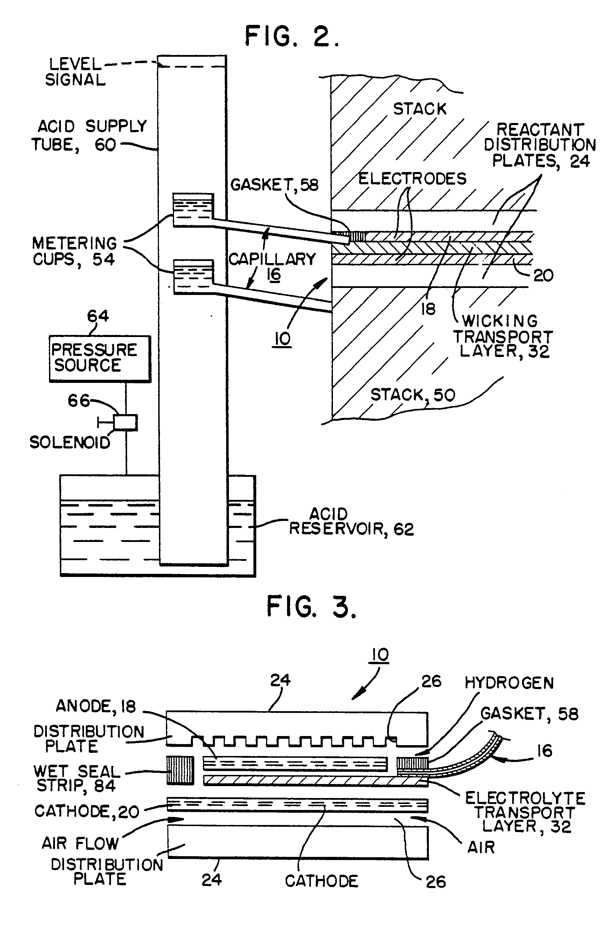

As shown diagrammatically in Figure 2, the cell 10 is part of a stack 50 of such cells. Also indicated diagrammatically in Figure 2 are components of the fuel cell 10, namely, the plates 24 which distribute the gaseous reactants about the electrodes 18 and the central layer 32 of the matrix assembly 22 which serves as a means to draw and distribute electrolyte.

In accordance with the invention, the electrolyte distribution system 52 supplies electrolyte to each cell of ths stack 50. The system 52 includes a set of metering cups 54 coupled individually to respective ones of the cells 10 by the conduits 16. Each conduit 16 is a capillary tube. An end of a conduit 16 is secured in a cell 10 at the layer 32 with the aid of a gasket 58 for guiding the electrolyte from the conduit 16 into the layer 32 for transport throughout the region between the electrodes 18, 20. Alternatively, one cup can serve a suitably small number of cells in a stack.

Assuming the electrolyte to be the aforementioned phosphoric acid, the acid is dispensed to the respective cups by means of passageway or cylinder 60 through which the acid is elevated from a reservoir 62. Any suitable means can be used to elevate the electrolyte such as a source 64 of air pressure. The air pressure acts through a solenoid valve 66 upon the surface of the acid in the reservoir 62. Pressure on the surface of the acid in the reservoir 62 drives the acid into the cylinder 60, and then upwards through the cylinder 60 to provide a column of acid which pours into the cups 54 and temporarily inundates the cups. After the filling of the cups, the air pressure is released, and the residual acid returns to the reservoir 62.

In accordance with a feature of the invention, the separation of the stored amounts of electrolyte in the respective cups 54 during the tansport along the conduits 16 provides for electrical isolation of the electrolyte of the respective cells 10.

Such electrical isolation prevents the generation of shunt currents among various ones of the cells 10 in the stack 50. Shunt currents are likely to develop if there were a connection path by means of electrolyte from one fuel cell to the next fuel cell. By separating the electrolyte of each of the cells 10, the cells are able to operate independently of each other. This enables the individual cells to be connected in a series arrangement for the development of substantial voltage and the cells to operate without danger of a short or shunt current developing. Connection of the end of a conduit 16 to an individual fuel cell, such as the cell 10, is made, as shown in Figure 3, with the layer 32 and the aid of a gasket 58. However, a small amount of shunt current is tolerable in a practical sense and, thus, the connection of a suitably small number of cells to one conduit is permitted.

In operation, electrolyte is transported through the conduits 16 of the system 52 by gravity to enter fuel cells of a stack. By use of fuel cells constructed in accordance with the structure of Figure 1, the central layer 32 of the matrix assembly 22 draws electrolyte by capillary forces into space between the electrodes 18 and 20. As described in Figure 1, the hydrophilic layer 34 of the matrix assembly 22 draws electrolyte from the central layer 32 and, thereby, creates space for more electrolyte which is provided by the movement of electrolyte down the conduits 16.

It is recognized that the rate of delivery of the electrolyte into a fuel cell 10 depends on the amount of hydrostatic pressure resulting from the difference in elevation between the top of the electrolyte in the cup 54 and the cell 10. The cups 54 are arranged with increasing height corresponding to the increasing height of the successive cells in the stack. In addition, the cups 54 are filled to the brim so that the hydrostatic pressures developed within the individual cups 54 are maintained at the requisite amounts for maintaining the desired hydrostatic pressure. The individual cups are open at their tops or mouths. Thereby, the fuel cells are filled with the requisite amounts of electrolyte without danger of overfilling. The electrolyte in the cups is maintained at an adequate level by refilling at a suitable frequency. The electrolyte-containing compartments should be constructed so as to be electrically insulated from each other or made of a non-conducting material such as Teflon. They should also have good corrosion resistance against the electrolyte.

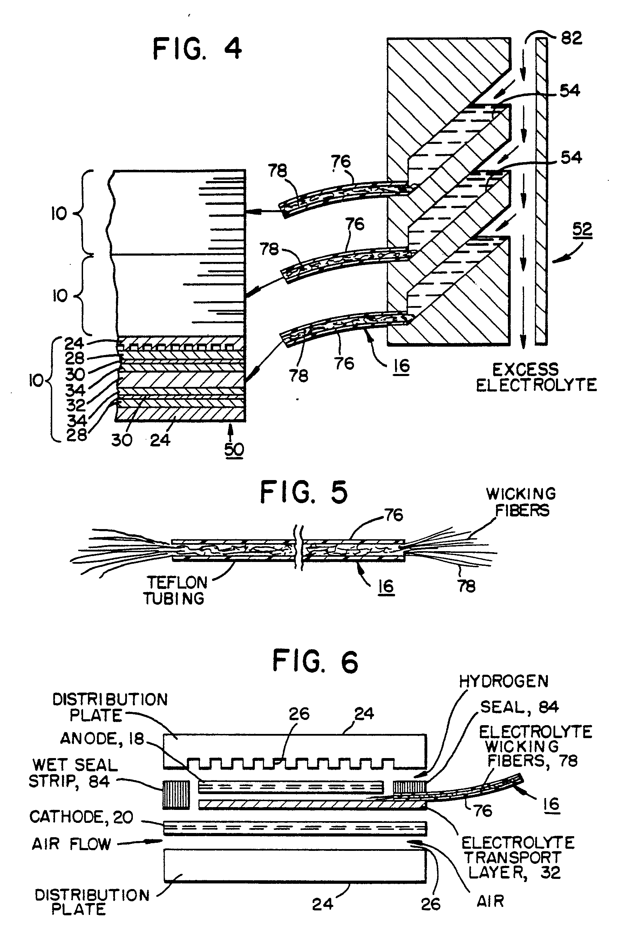

Another embodiment of the invention is shown diagrammatically in Figure 4, wherein the cell 10 is part of a stack 50 of such cells. Also indicated diagrammatically in Figure 4, are other components of the fuel cell 10; the plates 24 which distribute the gaseous reactants about the electrodes 18, 20 and the central layer 32 of the matrix assembly 22 which serves as a means to draw and distribute electrolyte.

In accordance with the invention, the electrolyte distribution system 52 supplies electrolyte to each cell of the stack 50. The system 52 includes a set of metering cups 54 coupled individually to respective ones of the cell 10 by the conduits 16. Each conduit 16 is a flexible tube. An end of a conduit 16 is secured in a cell 10 at the layer 32 with the aid of a gasket (not shown in Figure 4) for guiding the electrolyte from the conduits 16 into the layer 32 for transport throughout the region between the electrodes 18, 20. Alternatively, one cup can serve a suitably small number of cells in a stack.

Assuming the electrolyte to be the aforementioned phosphoric acid, the acid can be dispensed to the respective cups by any suitable means (not shown) through which the acid is elevated from a reservoir (not shown). For instance, as described in conjunction with Figure 2, a source of air pressure can act through a conventional solenoid valve upon the surface of the acid in the reservoir driving the acid into the passageway or cylinder 82, and then upwards through the cylinder 82 to provide a column of acid which pours into the cups 54 and temporarily inundates the cups. The separation of the stored amounts of electrolyte in the respective cups 54 during the transport along the conduits 16 provides for electrical isolation of the electrolyte of the respective cells 10 and prevents the generation of shunt electric currents among various ones of the cells 10 in the stack 50.

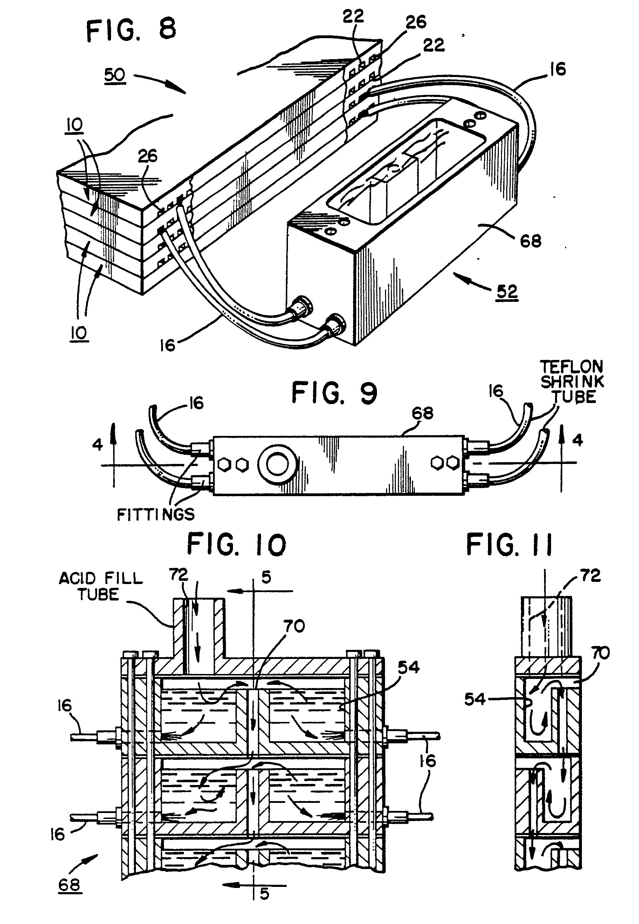

An alternative embodiment of the construction of the system 52 is shown in Figures 8—11. The manifold 16 (shown diagrammatically in Figure 1) comprises a central chamber 68 containing the cups 54 which are connected by a system 70 of passages to an inlet port 72. The individual cups 54 connect to the tube 16 for conveying the electrolyte to the respective cells 10. Electrolyte entering through the inlet port 72 enters into the cups 54 and overflows from some of these cups 54 by the passage system 70 to enter other ones of the cups 54. Thereby, the electrolyte in each of the cups 54 is electrically isolated from the electrolyte of the other cups.

A storage and delivery system feeds electrolyte to a set of fuel cells, each of which is constructed as is the fuel cell 10 of Figure 1. The cells are generally arranged in a stack 50 as portrayed diagrammatically in Figure 4. In accordance with the invention, the storage and delivery system 52 includes a set of the conduits 16 (Figure 1), each of which as shown in Fig. 5 comprises a tube 76, having wicking fibers 78 therein. Electrolyte is drawn by capillary action through the wicking fibers 78.

Connection of the end of a conduit 16 to an individual fuel cell, such as the cell 10, can be accomplished by extending the fibers 78 beyond the end of the tube 76 (shown in Figure 5) to contact the layer 32 with the aid of a seal 84 (shown in Figure 6). The selection of fibers should be limited to materials that will have the requisite endurance in a fuel cell environment. Specifically, they should be corrosion resistant to hot, concentrated electrolyte. One such material is graphite fibers which have good resistance to corrosion and high temperatures. Preferably, the fibers 78 are made of carbon and the tube 76 is made of a heat shrinkable plastic. The plastic of the tube 76 is heat shrunk after insertion of the fiber 78 so as to tightly hold the fibers together to mechanically add strength to the fibers. The plastic should also be resistant to hot electrolyte and high temperatures, such as those in the 400 degree F range. A good tube material is one made of heat shrinkable Teflon, for example.

A suitable material for the tube is "TFE Shrinkable Tubing" supplied by Chemplast Corporation, under the designation "2×16 TW (Thin-wall, 2X Shrinkable)". The inside diameter of this tubing is approximately 2.3 mm (0.093 inches) and the wall thickness is approximately 0.23 mm (0.009 inches). After heat treatment, the inside diameter shrinks to approximately 1.5 mm (0.061 inches) and the wall thickness will change to approximately 0.3 mm (0.012 inches).

A suitable material for the carbon fibers used in the tube is "Quicksorb 200 Series" supplied by Takeda Chemical Industries, Ltd. International Div., of Tokyo Japan. The fibers are supplied in a yarn form and have 1,050—1,550 $m^2/g$ (BET) specific surface area which consists mostly of pores smaller than 30 nm (300 A) diameter and a 0.4—0.6 cc/g pore volume. It is preferable to have a tight fit between the yarn and tube inside diameter and to avoid crimping the tube. It is also preferable to have a uniform cross section in the fibers when they are placed in the tube. The presence of the fibrous yarn in the tube provides an electrolyte demand flow system; that is, as electrolyte is needed in the cell, it will flow from the reservoir through the tube to the cell.

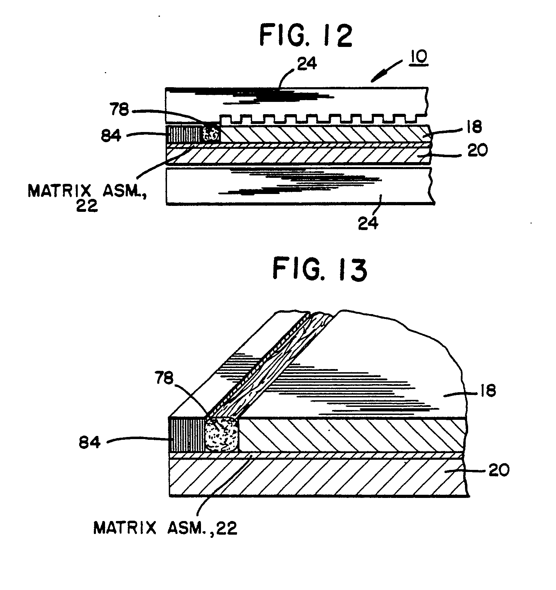

In operation, electrolyte is transported by the conduit 16 of the system 52 by capillary action to enter fuel cells of a stack. By use of fuel cells constructed in accordance with the structure of Figure 1, the central layer 32 of the matrix assembly 22 draws electrolyte by capillary forces into the space between the electrodes 18 and 20. The hydrophilic layer 34 of the matrix assembly 22 draws electrolyte from the central layer 32 and, thereby, creates space for more electrolyte which is provided by the movement of electrolyte down the conduits 16. When using a material having a single pore size, it can be joined to the cell in a manner shown in Figures 12 and 13.

In this embodiment, the wick in the tube 76 (Figure 5) extends into the cell and along the width of the cell or substantially across the cell adjacent and on the electrolyte matrix assembly 22 in the cell. The wick portion in the cell can be compressed between the reactant distribution plate and matrix assembly or layer 22 during cell assembly. This arrangement provides contact between the wick 78 and the matrix layer 22 over a large area and assists distribution of electrolyte throughout the matrix layer 22 area. It also eliminates the necessity of a duel porosity matrix assembly.

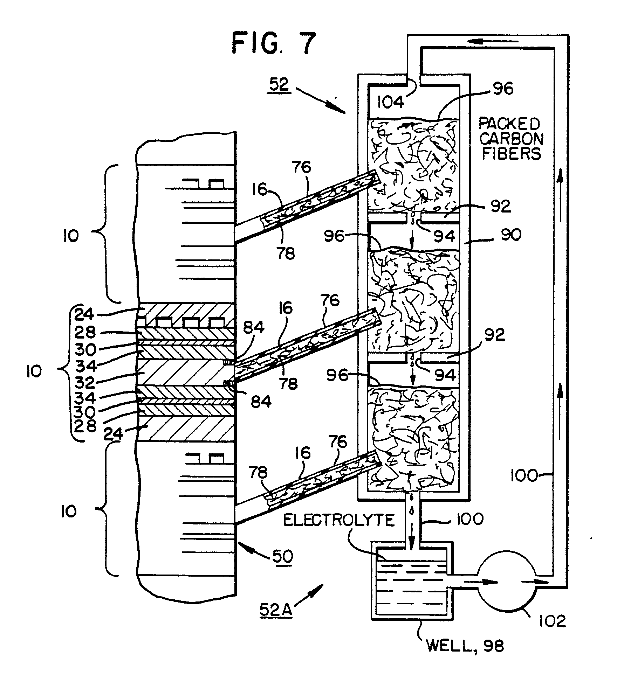

Returning to Figures 8—11, electrolyte entering through the inlet port 72 falls into the cups 54, and overflows from some of these cups 54 by the system 70 to enter other ones of the cups 54. The term "overflow" as used herein includes all types of systems wherein the excess electrolyte in the compartments flows out of the compartment after the compartment contains a predetermined amount of electrolyte. Specifically, it includes the system shown in Figures 8—11 and the packed bed system in Figure 7. The electrolyte in each of the cups 54 is electrically isolated from the electrolyte of the other cups. The overflow feature avoids excessive or unintended hydrostatic pressure from being placed on the cells even while the cups or tanks are being refilled with electrolyte.

An alternative embodiment of the electrolyte distribution and storage systems as shown in Figure 7 as system 52A. This system includes an elongated vertical chamber 90 formed with a series of internal compartments, or trays 92, having drain 94. Each tray 92 holds a wad 96 of sponge-like material which holds electrolyte, such as carbon fibers. The sponge material is desirable since it prevents spillage of the electrolyte.

This system is unique because it contains a three stage wicking system. Stage 1 is the packed bed or sponge 96. Stage 2 is the wicking fibers in the tube. Stage 3 is the electrolyte matrix assembly or layer in the cell. This three stage system provides additional control over the delivery of electrolyte in response to demand for electrolyte by the cell. This system also provides a constant hydrostatic pressure on the electrolyte in the cell due to the effect of the packed bed which provides a vertical height for the electrolyte. Electrolyte is circulated, via a well 98 and piping 100, by a pump 102 to pass through the chamber 90. The piping 100 enters the chamber 90 at an inlet port 104 at the top of the chamber 90 and exists through the drain 94 at the bottom of the chamber 90. The well 98 serves as a storage reservoir for electrolyte.

In operation, the electrolyte fills the wad 96 in the upper most tray 92, the excess electrolyte passing via the drain 94 into the wad 96 in the following tray 92. Thereby, all the trays contain electrolyte at the same hydrostatic pressure, assuming that all wads 96 are of the same depth.

The drain is designed in a way that excess electrolyte would pass from one compartment to another via dripping, thus achieving an ionic separation between the individual components. This avoids possible shunt currents between compartments.

Figure 7 also shows a stack 50 of cell 10, one cell being shown in detail, wherein the central layer 32 is coupled by a conduit 16, in the form of a tube 16 with an internal wick 78, to its corresponding tray 92. The difference in height between the top of a wad 96 and the central layer 32 of cell 10 establishes the hydrostatic pressure. This hydrostatic pressure together with wick 76 in tube 16 and the drawing section of the central layer 32 draws electrolytes through the conduit 16. Connection of the end of a conduit 16 to an individual fuel cell, such as the cell 10, is made by layer 32 with the aid of a seal 84.

In operation, electrolyte is transported through the conduits 16 of the systems 52 and 52A by gravity and by capillary action, to enter fuel cells of a stack. By use of fuel cells constructed in accordance with the structure of Figure 1, the central layer 32 of the matrix layer or assembly 22 draws electrolyte by capillary forces into the space between the catalyst layers 30. The hydrophilic layer 34 of the matrix 22 draws electrolyte from the central layer 32 and, thereby, creates space for more electrolyte which is provided by the movement of electrolyte down the conduits 16. The cups 54 and trays 92 are arranged with increasing height corresponding to the increasing height of the successive cells in the stack. In addition, the cups 54 are filled to the brim, and similarly, the wads 96 are filled to the maximum amount so that the hydrostatic and capillary pressure developed within the individual cups 54 and wads 96 is maintained at the requisite amount for maintaining the desired constant feed pressure. The individual cups or trays are open at their tops or mouths. Thereby, the fuel cells are filled with the requisite amounts of electrolyte without danger of overfilling.

The electrolyte cup 54 and trays 92 are shown in the Figures in the embodiment in which each supplies only one fuel cell with electrolyte. The electrolyte-containing compartments, trays or cups should be constructed so as to be electrically insulated from each other or made of a non-conducting material such as Teflon. This enables the individual cells to be connected in a series arrangement for development of substantial voltage and the cells to operate without danger of short or shunt current developing. They should also have good corrosion resistance against the electrolyte. In some environments, a small amount of shunt current is tolerable in a practical sense, and, thus, the connection of a suitably small number of cells to one compartment, cup or tray can be permitted.

It is to be understood that the above-described embodiment of the invention is illustrative only and that modifications thereof may occur to those skilled in the art. Accordingly, this invention is not to be regarded as limited to the embodiment as disclosed herein, but is to be limited only as defined by the appended claims.

## Claims

1. An apparatus for supplying electrolyte to fuel cells in a stack of fuel cells characterized in that it comprises:

(a) means for storing electrolyte externally to said fuel cells, each of said cells including a porous medium for holding electrolyte;

(b) means for conducting electrolyte from said storing means to the porous medium in each of said cells; and

(c) means for maintaining a predetermined hydrostatic or capillar pressure of electrolyte at said conducting means.

2. The apparatus according to claim 1, wherein the porous medium for holding electrolytes includes a porous medium for transporting electrolytes.

3. The apparatus according to claim 1, wherein a common reservoir is provided for supplying electrolyte to the means for storing electrolyte, and wherein the means for storing the electrolyte comprises a series of individual compartments.

4. The apparatus according to claim 3, wherein said storing means is in the form of a set of cups having open mouths for storing electrolyte separately for each of said fuel cells or group of fuel cells, and said conducting means comprises a set of capillary tubes, which tubes connect the storing means to said fuel cells or groups of fuel cells.

5. The apparatus according to claim 4, wherein a column of electrolyte is provided such that each of said cups can be temporarily inundated by raising said column of electrolyte.

6. The apparatus according to claim 4 or claim 5, wherein an individual compartment is connected to at lesat two fuel cells by means of the capillary tubes.

7. The apparatus according to claim 1, wherein said storing means includes a series of compartments for the separate storage of electrolyte and said means for maintaining a predetermined hydrostatic pressure of electrolyte at said conducting means includes means for positioning of said compartments at heights corresponding to the locations of respective ones of said cells in said stack and means for allowing the electrolyte to overflow from one compartment to the next.

8. The apparatus according to claim 7, wherein said means for maintaining a predetermined hydrostatic pressure includes a circulatory system for re-circulating electrolyte through said compartments.

9. The apparatus according to any preceding claim, wherein said means for conducting electrolyte from said storing means to said porous medium for transporting and holding electrolyte in each of said cells includes a wicking medium.

10. The apparatus according to claim 9, wherein said conducting means comprises a set of tubes having wicking fibers therein, each of said tubes being coupled from said storing means to respective ones of said fuel cells.

11. The apparatus according to claim 10, wherein said tubes are fabricated of heat shrinkable plastic and said fibers are carbon, said plastic of said tubes being heat shrunk after insertion of said fibers therein to tightly bind said fibers together.

12. The apparatus according to claim 11, wherein said wicking fibers comprise graphite fibers.

13. The apparatus according to any of claims 9 to 12, wherein said wicking medium extends into and substantially across the porous medium so as to distribute electrolyte directly to a larger portion of said medium.

14. An apparatus according to any preceding claim, wherein said storing means is in the form of compartments containing fibrous wad-like material for holding and storing electrolyte separately for each of said fuel cells or group of fuel cells, each of said compartments being adapted to be filled by flowing electrolyte therethrough until said wad-like material becomes saturated with electrolyte.

**Patentansprüche**

1. Vorrichtung zum Zuführen von Elektrolyten zu Brennstoffzellen in einem Brennstoffzellenstapel, gekennzeichnet durch:

(a) Mittel zum Speichern des Elektrolyten außerhalb der Brennstoffzellen, wobei jede Zelle ein poröses Medium zur Aufnahme des Elektrolyten aufweist;

(b) Mittel zum Überleiten des Elektrolyten von den Speichermitteln zum porösen Medium in jeder der Zellen; und

(c) Mittel zum Aufrechterhalten eines vorbestimmten hydrostatischen oder kapillaren Druckes des Elektrolyten in den Überleitmitteln.

2. Vorrichtung nach Anspruch 1, dadurch gekennzeichnet, daß das poröse Medium zur Aufnahme des Elektrolyten ein porösen Medium zum Transport des Elektrolyten umfaßt.

3. Vorrichtung nach Anspruch 1, dadurch gekennzeichnet, daß ein gemeinsames Reservoir für die Zufuhr des Elektrolyten zu den Elektrolytspeichermitteln vorgesehen ist und daß die Mittel zum Speichern des Elektrolyten eine Reihe von einzelnen Abteilen aufweisen.

4. Vorrichtung nach Anspruch 3, dadurch gekennzeichnet, daß die Speichermittel in Form eines Satzes von Schalen ausgebildet sind, die offene Mündungen zum gesonderten Speichern des Elektrolyten für jede der Brennstoffzellen oder Gruppen von Brennstoffzellen aufweisen, und daß die Überleitmittel einen Satz von Kapillarrohren aufweisen, welche die Speichermittel mit den Brennstoffzellen oder Gruppen von Brennstoffzellen verbinden.

5. Vorrichtung nach Anspruch 4, dadurch gekennzeichnet, daß eine Elektrolytensäule vorgesehen ist, derart, daß jede der Schalen durch Anheben der Elektrolytensäule temporär geflutet werden kann.

6. Vorrichtung nach Anspruch 4 oder 5, dadurch gekennzeichnet, daß ein einzelnes Abteil über die Kapillarrohre an zumindest zwei Brennstoffzellen angeschlossen ist.

7. Vorrichtung nach Anspruch 1, dadurch gekennzeichnet, daß die Speichermittel eine Reihe von Abteilen zur gesonderten Speicherung des Elektrolyten aufweisen und daß die Mittel zur Aufrechterhaltung eines vorbestimmten hydrostatischen Druckes des Elektrolyten in den Überleitmitteln Mittel zum Positionieren der Abteile in Höhen aufweisen, welche den Lagen der betreffenden Zellen im Stapel entsprechen, und Mittel, die es dem Elektrolyten gestatten, von einem Abteil in das nächste überzuströmen.

8. Vorrichtung nach Anspruch 7, dadurch gekennzeichnet, daß die Mittel zur Aufrechterhaltung eines vorbestimmten hydrostatischen Drukkes ein Zirkulationssystem zum Rezirkulieren des Elektrolyten durch die Abteile umfassen.

9. Vorrichtung nach einem der vorhergehenden Ansprüche, dadurch gekennzeichnet, daß die Mittel zum Überleiten des Elektrolyten von den Speichermitteln zu dem für den Transport und die Aufnahme des Elektrolyten bestimmten porösen Medium in jeder der Zellen ein dochtartiges Medium aufweisen.

10. Vorrichtung nach Anspruch 9, dadurch gekennzeichnet, daß die Überleitmittel einen Satz von Rohren aufweisen, in denen dochtartige Fasern enthalten sind, wobei jedes der Rohre von den Speichermitteln weg an entsprechende der Brennstoffzellen gekuppelt sind.

11. Vorrichtung nach Anspruch 10, dadurch gekennzeichnet, daß die Rohre aus wärmeschrumpfbarem Kunststoff hergestellt sind und daß die Fasern Kohlenstoffasern sind, wobei der Kunststoff der Rohre nach dem Einbringen der Fasern wärmegeschrumpft wird, um die Fasern eng aneinander zu binden.

12. Vorrichtung nach Anspruch 11, dadurch gekennzeichnet, daß die dochtartigen Fasern Graphitfasern enthalten.

13. Vorrichtung nach einem der Ansprüche 9 bis 12, dadurch gekennzeichnet, daß das dochtartige Medium sich in das und im wesentlichen quer über das poröse Medium erstreckt, damit der Elektrolyt unmittelbar über einen größeren Teil des Mediums verteilt wird.

14. Vorrichtung nach einem der vorhergehenden Ansprüche, dadurch gekennzeichnet, daß die Speichermittel in Form von Abteilen ausgebildet sind, die faseriges knäuelartiges Material zur Aufnahme und zum Speichern des Elektrolyten enthalten, gesondert für jede der Brennstoffzellen bzw. Gruppe von Brennstoffzellen, wobei jedes Abteil durch Durchströmen des Elektrolyten gefüllt werden kann, bis das knäuelartige Material mit dem Elektrolyten gesättigt ist.

**Revendications**

1. Appareil pour alimenter en électrolyte des piles à combustible dans un empilement de piles à combustible caractérisé en ce qu'il comprend:

a) des moyens pour stocker l'électrolyte à l'extérieur des piles à combustible en question, chacune de ces piles comprenant un milieu poreux pour retenir l'électrolyte;

b) des moyens pour conduire l'électrolyte depuis ces moyens de stockage vers le milieu poreux dans chacune desdites piles; et

c) des moyens pour maintenir une pression hydrostatique ou capillaire prédéterminée d'électrolyte sur lesdits moyens d'alimentation.

2. Appareil selon la revendication 1, dans lequel le milieu poreux pour maintenir les électrolytes comprend un milieu poreux pour transférer les électrolytes.

3. Appareil selon la revendication 1, dans lequel un réservoir commun est implanté pour alimenter en électrolyte les moyens de stockage d'électrolyte, et dans lequel les moyens de stockage de l'électrolyte comprennent une série de compartiments individuels.

4. Appareil selon la revendication 3, dans lequel ledit moyen de stockage est sous la forme d'une série de coupes ayant des ouvertures totales pour stocker séparément l'électrolyte pour chaque pile à combustible en question ou groupe de piles à combustible, et lesdits moyens d'alimentation comprennent une série de tubes capillaires, ces tubes mettant en relation les moyens de stockage et lesdites piles à combustible ou groupe de piles à combustible.

5. Appareil selon la revendication 4, dans lequel une colonne d'électrolyte est réalisée de telle manière que chacune desdites coupes peut temporairement être submergée en élevant ladite colonne d'électrolyte.

6. Appareil selon la revendication 4 ou la revendication 5, dans lequel un compartiment individuel est relié à au moins deux piles à combustible au moyen de tubes capillaires.

7. Appareil selon la revendication 1, dans lequel ledit moyen de stockage comprend une série de compartiments pour le stockage séparé d'électrolyte et ledit moyen pour maintenir une pression hydrostatique prédéterminée d'électrolyte sur lesdits moyens d'alimentation comprend un moyen de positionner lesdits compartiments à des hauteurs correspondant aux positions respectives de chaque pile dans l'empilement en question et un moyen pour permettre à l'électrolyte de déborder d'un compartiment au suivant.

8. Appareil selon la revendication 7, dans lequel ledit moyen de maintien d'une pression hydrostatique prédéterminée comprend un système de circulation pour recycler l'électrolyte à travers lesdits compartiments.

9. Appareil selon l'une quelconque des revendications précédentes, pour l'alimentation en électrolyte depuis lesdits moyens de stockage vers ledit moyen poreux pour transférer et maintenir l'électrolyte dans chacune desdites piles comprend un milieu absorbant en mèche.

10. Appareil selon la revendication 9, dans lequel le moyen d'alimentation comprend une série de tubes ayant des fibres en mèche à l'intérieur, chacun desdits tubes étant reliée desdits moyens de stockage aux piles respectives en question.

11. Appareil selon la revendication 10, dans lequel lesdits tubes sont fabriqués en matière plastique thermorétractable et lesdites fibres sont des fibres de carbone, la matière plastique des tubes en question étant thermorétractée après insertion à l'intérieur desdites fibres de manière à lier étroitement ensemble lesdites fibres.

12. Appareil selon la revendication 11, dans lequel lesdites fibres en mèche comprennent des fibres de graphite.

13. Appareil selon l'une quelconque des revendications 9 à 12, dans lequel ledit milieu en mèche s'étend dans et sensiblement à travers le milieu poreux de manière à distribuer l'électrolyte directement à une large portion dudit milieu.

14. Appareil selon l'une quelconque des revendications précédentes, dans lequel ledit moyen de stockage est sous forme de compartiments contenant du matériau en tampon fibreux pour maintenir et stocker l'électrolyte séparément pour chaque pile à combustible ou groupe de piles à combustible en question, chaque dit compartiment étant adapté pour être rempli par écoulement et traversé d'électrolyte jusqu'à ce que le matériau en tampon devienne saturé d'électrolyte.

FIG. I.

HYDROPHOBIC SUBSTRATE, 28
ELECTRODE, 18 (ANODE)
CATALYST, 30
HYDROPHILIC, 34
LARGE PORE TRANSPORT, 32
HYDROPHILIC, 34
CATALYST, 30
ELECTRODE, 20 (CATHODE)
HYDROPHOBIC SUBSTRATE, 28

EXT. CIR.

MATRIX ASM, 22

ELECTROLYTE CONDUIT

REACTANT MANIFOLD

REACTANT MANIFOLD

0 107 396

0 107 396

# FIG. 2.

LEVEL SIGNAL

ACID SUPPLY TUBE, 60

GASKET, 58

STACK

REACTANT DISTRIBUTION PLATES, 24

ELECTRODES

METERING CUPS, 54

CAPILLARY 16

20

18

10

WICKING TRANSPORT LAYER, 32

64

PRESSURE SOURCE

66

SOLENOID

STACK, 50

ACID RESERVOIR, 62

# FIG. 3.

10

24

26

HYDROGEN

ANODE, 18

DISTRIBUTION PLATE

GASKET, 58

16

WET SEAL STRIP, 84

ELECTROLYTE TRANSPORT LAYER, 32

CATHODE, 20

AIR FLOW

DISTRIBUTION PLATE

24

CATHODE

AIR

26

2

# FIG. 4

10
10
24
28
30
34
32
34
28
30 24
10
50

78 76
78 76
78 76
16
82
54
54
52

EXCESS
ELECTROLYTE

# FIG. 5

WICKING
FIBERS

76
16
78

TEFLON
TUBING

# FIG. 6

DISTRIBUTION
PLATE
ANODE, 18
WET SEAL
STRIP, 84
CATHODE, 20
AIR FLOW
DISTRIBUTION
PLATE

26 24
24

HYDROGEN
SEAL, 84
ELECTROLYTE
WICKING
FIBERS, 78
16
76
ELECTROLYTE
TRANSPORT
LAYER, 32
AIR

24 26

3

# FIG. 7

ELECTROLYTE

PACKED CARBON FIBERS

WELL, 98

FIG. 8

FIG. 9

TEFLON
SHRINK
TUBE

FITTINGS

FIG. 10

ACID FILL
TUBE

FIG. 11

## FIG. 12

24

10

78

84

18

20

MATRIX ASM., 22

24

## FIG. 13

78

18

84

20

MATRIX ASM., 22